**Europäisches Patentamt**

**European Patent Office**

**Office européen des brevets**

(19)

(11) Veröffentlichungsnummer : **0 494 065 A1**

(12) # EUROPÄISCHE PATENTANMELDUNG

(21) Anmeldenummer : **91890310.5**

(22) Anmeldetag : **24.12.91**

(51) Int. Cl.⁵ : **B67D 5/02,** B67D 5/54, G06K 17/00

(30) Priorität : **02.01.91 AT 6/91**

(43) Veröffentlichungstag der Anmeldung : **08.07.92 Patentblatt 92/28**

(84) Benannte Vertragsstaaten : **CH DE DK ES IT LI NL**

(71) Anmelder : **EBNER ELECTRONIC GESELLSCHAFT m.b.H. Neuhofenstrasse 35 A-4810 Gmunden (AT)**

(72) Erfinder : **Ebner, Walter, Ing. Greimlhofstrasse 13 A-4813 Altmünster (AT)**

(74) Vertreter : **Hübscher, Heiner, Dipl.-Ing. et al Spittelwiese 7 A-4020 Linz (AT)**

(54) **Vorrichtung zur Übernahme von Milch od. dgl.**

(57)   Eine Vorrichtung zur Übernahme von in Lieferbehältern (1) zugelieferter Milch in einen Sammeltank und zum Erfassen zugehöriger Lieferkenndaten besteht aus einer einen Saugschlauch (6) und eine Sauglanze (7) aufweisenden, in den Sammeltank führenden Absaugeinrichtung und einer an ein Datenverarbeitungsgerät (5) angeschlossenen, an der Sauglanze (7) vorgesehenen Leseeinrichtung (3) zum Auslesen einer an den Lieferbehältern (1) zugeordneten maschinenlesbaren Liefermarkierung (2).

   Um eine sichere Zuordnung der übernommenen Milch zum zugehörigen Lieferanten zu erreichen und das Auslesen der Liefermarkierungen zu vereinfachen, sitzt die in Form eines Halbleiterspeicherelementes od. dgl. ausgebildete Liefermarkierung (2) im Inneren der Lieferbehälter (1) und es ist eine Leseeinrichtung (3) zum kontaktlosen Auslesen dieser Halbleiterspeicherelemente vorgesehen.

EP 0 494 065 A1

Die Erfindung bezieht sich auf eine Vorrichtung zur Übernahme von in Lieferbehältern zugelieferter Milch od. dgl. in einen Sammeltank und zum Erfassen zugehöriger Lieferkenndaten, mit einer einen Saugschlauch und eine Sauglanze und einer an ein Datenverarbeitungsgerät angeschlossenen, an der Sauglanze vorgesehenen Leseeinrichtung zum Auslesen einer den Lieferbehältern zugeordneten maschinenlesbaren Liefermarkierung.

Die in einem landwirtschaftlichen Betrieb anfallende Milch wird in Milchkannen od. dgl. Lieferbehältern abgefüllt und an einer Sammelstelle von einem Milchsammelwagen einer Molkerei od. dgl. übernommen. Um dabei feststellen zu können, von wem die übernommene Milch stammt, ist es notwendig, bei der Milchübernahme auch Lieferkenndaten zu erfassen und diese Kenndaten den jeweiligen Bestimmungsdaten der übernommenen Milch, wie Menge, Milchprobennummern u. dgl. zuzuordnen. Dazu ist es bereits bekannt, die Lieferbehälter mit einer maschienenlesbaren Liefermarkierung zu versehen und diese Markierung vor der Milchübernahme mit einer Leseeinrichtung auszulesen, so daß die Lieferkenndaten dann der beim Auspumpen der Behälter gemessenen Milchmenge und den den abgenommenen Milchproben zugewiesenen Probenummern durch ein Datenverarbeitungsgerät zugeordnet werden können. Zum Auslesen dieser Liefermarkierungen wurden auch schon sauglanzenfeste Leseeinrichtungen vorgeschlagen, wobei diese Leseköpfe allerdings sorgfältig auf Führungen der Liefermarkïerungsträger aufgesetzt werden müssen, um die Auslesung sicherzustellen, wodurch die Liefermarkierungen außen an den Behältern zu befestigen sind und es zu einem heiklen, umständlichen Handhaben der Absaugeinrichtung kommt.

Soll gleichzeitig beim Einführen der Sauglanze in die Behälter ausgelesen werden, ist es notwendig, die Leseköpfe an den Behälterrand umgreifenden Haltern zu befestigen, was zu störenden, ungeschützten Zusatzteilen für die Sauglanze führt. Abgesehen davon, ist eine wirklich sichere Identifizierung nicht gewährleistet, da sich ja theoretisch die Markierung des einen Behälters erfassen und dann ein anderer Behälter leeren läßt.

Der Erfindung liegt daher die Aufgabe zugrunde, diese Mängel zu beseitigen und eine Vorrichtung der eingangs geschilderten Art zu schaffen, die auf rationelle Weise eine eindeutige Zuordnung von zugelieferter Milch und jeweiligem Zulieferer garantiert und Manipulationen bei der Milchübernahme ausschließt.

Die Erfindung löst diese Aufgabe dadurch, daß die in Form eines Halbleiterspeicherelementes od. dgl. ausgebildete Liefermarkierung im Inneren der Lieferbehälter sitzt und gegebenenfalls die Anschlußleitung zwischen der zum kontaktlosen Auslesen dieser Halbleiterspeicherelemente geeigneten Leseeinrichtung und Datenverarbeitungsgerät dem Saugschlauchmantel entlang verlegt ist, wobei die Verbindungskupplung einer vom Saugschlauch abnehmbaren Sauglanze auch Verbindungselemente für die Anschlußleitung umfaßt. Dadurch entsteht aus Leseeinrichtung und Absaugeinrichtung eine Hantierungseinheit, die zwangsweise nur das Absaugen aus dem Behälter, dessen Liefermarkierung ausgelesen wurde, erlaubt. Automatisch mit dem Eintauchen der Sauglanze in den Behälter erfolgt die Auslesung, was von vornherein jede Manipulationsgefahr unterbindet. Für die Liefermarkierung können Halbleiterspreicherelemente oder andere kontaktlos auslesbare Markierungen vorgesehen sein, die durch das einfache Vorbeiführen der Leseeinrichtung beim Eintauchen der Lanze auslesbar sind. Die erfaßten Daten werden über eine Anschlußleitung aber auch über Funk od. dgl. an das Datenverarbeitungsgerät übertragen, so daß die Milchübernahme und Kenndatenerfassung mit wenigen Handgriffen und vollautomatisch erfolgt. Durch eine einfache Steuerung der Absaugeeinrichtung kann dabei die Betätigung der Absaugeinrichtung von einer vorangehenden Auslesetätigkeit der Leseeinrichtung abhängig gemacht werden, was neben der Fälschungssicherheit auch das Hantieren selbst vereinfacht. Wird die gegebenenfalls vorhandene Anschlußleitung mehr oder weniger in den Saugschlauchmantel eingebettet, ist sie nicht nur vor Beschädigungen und Störungen geschützt, sondern sie beeinträchtigt auch nicht die Handhabung der Absaugeinrichtung. Da meistens die Sauglanze vom Saugschlauch ankoppelbar ist, wird zweckmäßigerweise in der Verbindungskupplung auch eine Verbindungsmöglichkeit für die Anschlußleitung geschaffen, so daß zwangsweise mit dem Ankuppeln der Sauglanze an den Saugschlauch die Leitungsverbindung hergestellt ist.

Nach einer weiteren Ausgestaltung der Erfindung ist die Leseeinrichtung mit Meßsensoren zum Erfassen von Meßdaten der zugelieferten Milch ausgerüstet, so daß bei der Milchübernahme nicht nur die zugehörigen Lieferkenndaten ausgelesen werden können, sondern sich auch direkt Milchwerte, wie Temperatur, Leitwerte u. dgl. messen und dem Datenverarbeitungsgerät eingeben lassen, was später Rückschlüsse auf Qualitätsänderungen u. dgl. erlaubt.

Zur Leitungsverbindung können durchaus übliche Steckkontakte od. dgl. vorgesehen sein, doch ist es besonders vorteilhaft, wenn als Verbindungselemente im Bereich der beiden Kupplungsteile jeweils eine Spule der in zwei Teilkreise getrennten Anschlußleitung für eine induktive Kopplung vorgesehen sind, da so die Datenübertragung kontaktlos erfolgt, wodurch es zu keiner oxidationsbedingten Beeinträchtigung der Verbindungsstelle kommen kann, die Leseeinrichtung über keine eigenen Stromversorgung verfügen muß und sich auch die über die Meßsensoren erfaßbaren Analogmeßwerte digital übertragen lassen.

Ein weiterer Vorteil dieser induktiven Kopplung im Bereich der Verbindungskupplung ist darin zu sehen, daß sich an den Saugschlauch nicht nur die Sauglanze, sondern auch andere Rohrstutzen, beispielsweise die Absaugstutzen von größeren Liefertanks ankuppeln lassen, wodurch dann auch die Möglichkeit gegeben ist, entsprechend vorbereitete Meßkreise im Bereich dieser Absaugstutzen über die induktive Kopplung an die Anschlußleitung der Absaugeinrichtung und damit an das Datenverarbeitungsgerät des Sammelwagens anzuschließen. Auch bei solchen Milchtanks ist dann eine automatische Lieferkennung ohne Fälschungsgefahr und ohne zusätzliche Handgriffe möglich.

In der Zeichnung ist der Erfindungsgegenstand rein schematisch veranschaulicht, und zwar zeigen

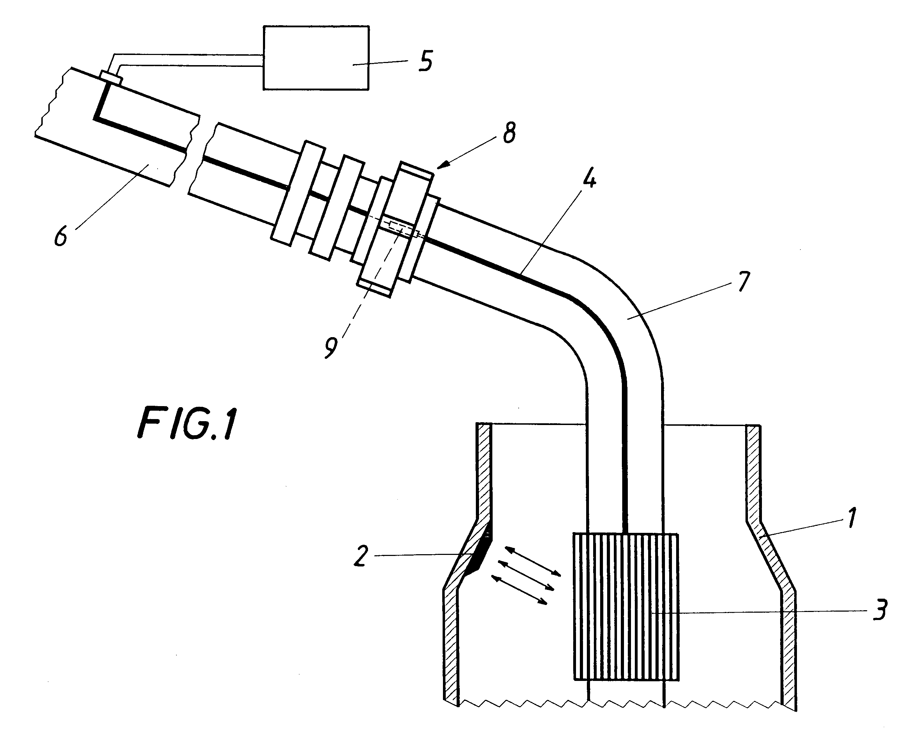

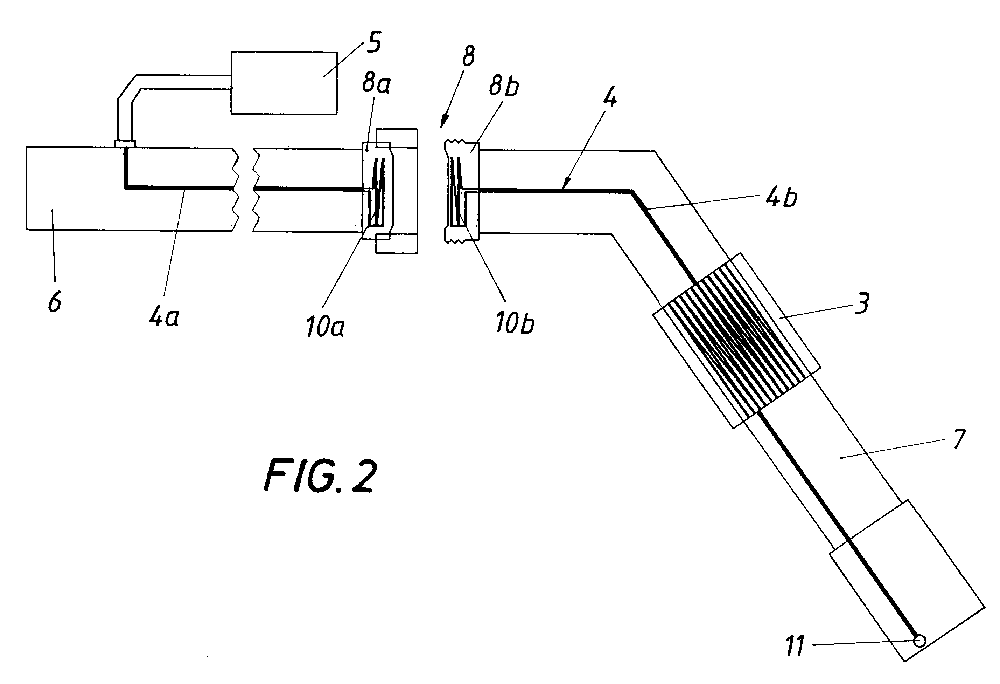

Fig. 1 und 2 je ein Ausführungsbeispiel einer Absaugeinrichtung der erfindungsgemäßen Vorrichtung in teilgeschnittener Seitenansicht.

Um bei der Übernahme von in einem Lieferbehälter 1 zugelieferter Milch in einen nicht weiter dargestellten Sammeltank den jeweils zugehörigen Lieferanten eindeutig identifizieren zu können, ist der Lieferbehälter 1 im Öffnungsbereich an seiner innenwandung mit einer Liefermarkierung 2 versehen, die entsprechend maschinenlesbare Lieferkenndaten enthält. Zum Auslesen dieser Liefermarkierung 2 ist eine Leseeinrichtung 3 vorgesehen, die über eine Anschlußleltung 4 mit einem nur angedeuteten Datenverarbeitungsgerät 5 in Verbindung steht. Zum Übernehmen der Milch gibt es eine nur mit ihrem Saugschlauch 6 und ihrer Sauglanze 7 dargestellte Absaugeeinrichtung, mit der die Milch aus dem Behälter 1 in den Sammeltank abgepumpt werden kann.

Um nun eine fälschungssichere Liefermarkierungsauslesung zu erreichen, ist die Leseeinrichtung 3 an der Sauglanze 7 befestigt und die Anschlußleitung 4 im Mantel des Saugschlauches 6 verlegt. Dadurch wird beim Eintauchen der Sauglanze 7 in den Behälter 1 zwangswelse die Leseeinrichtung 3 an der Liefermärkierung 2 vorbeigeführt, so daß durch eine entsprechend kontaktlose Auslesung automatisch die Lieferkenndaten über die Leseeinrichtung 3 erfaßt und dem Datenverarbeitungsgerät 5 eingegeben werden. Nach dem Auslesen der Markierung schaltet die Absaugeeinrichtung ein und entnimmt die Milch dem Behälter 1, so daß das Erfassen der Lieferkenndaten und das Übernehmen der Milch untrennbar miteinander verbunden sind und es keine Manipulationen und Irrtümer bei der Identifizierung der Lieferanten geben kann.

Da die Sauglanzen 7 meist abkuppelbar am Saugschlauch 6 angesetzt sind, muß die vorhandene Verbindungskupplung 8 auch für eine Trennmöglichkeit der Anschlußleitung 4 sorgen. Dazu können, wie in Fig. 1 angedeutet, die Kupplungstelle der Verbindungskupplung 8 Steckkontakte 9 für die Anschlußleitung 4 aufnehmen, so daß automatisch mit dem kuppeln bzw. Entkuppeln auch die Anschlußleitung 4 geschlossen bzw. getrennt wird.

Um hier eine kontaktlose Informationsübertragung zu ermöglichen, ist, wie in Fig 2 veranschaulicht, die Anschlußleitung 4 in zwei einerseits dem Saugschlauch 6, anderseits der Sauglanze 7 zugeordnete Teilkreise 4 a, 4 b unterteilt, welche Teilkreise im Bereich der beiden kupplungsteile 8 a, 8 b der Verbindungskupplung 8 Spulen 10 a, 10 b für eine induktive kopplung bilden. Dadurch wird ebenfalls beim Ankuppeln der Lanze 7 an den Saugschlauch 6 durch induktive kopplung die gewünschte Informationsübertragung gewährleistet, wobei der Leseeinrichtung 3 im Lanzenbereich alle Vorteile einer solchen induktiven kopplung zukommen.

Um gleichzeitig mit der Milchübernahme auch verschiedene Milchqualitätskenndaten, wie temperatur, Leitwert u. dgl. messen und erfassen zu können, ist die Leseeinrichtung 3 mit geeigneten Meßsensoren 11 ausgestattet, die die gewünschten Meßdaten liefern und über die Anschlußleitung 4 dem Datenverarbeitungsgerät eingeben.

Die erfindungsgemäße Vorrichtung zeichnet sich durch ihre einfache Handhabung und ihre sichere Identifizierung der Lieferkenndaten gleichzeitig mit der Milchübernahme aus.

## Patentansprüche

1. Vorrichtung zur Übernahme von in Lieferbehältern (1) zugelieferter Milch od. dgl. in einen Sammeltank und zum Erfassen zugehöriger Lieferkenndaten, mit einer einen Saugschlauch (6) und eine Sauglanze (7) aufweisenden, in den Sammeltank führenden Absaugeeinrichtung und einer an ein Datenverarbeitungsgerät (5) angeschlossenen, an der Sauglanze (7) vorgesehenen Leseeinrichtung (3) zum Auslesen einer den Lieferbehältern (1) zugeordneten maschinenlesbaren Liefermarkierung (2), dadurch gekennzeichnet, daß die in Form eines Halbleiterspeicherelementes od. dgl. ausgebildete Liefermarkierung (2) im Inneren der Lieferbehälter (1) sitzt und gegebenenfalls die Anschlußleitung (4) zwischen der zum kontaktlosen Auslesen dieser Halbleiterspeicherelemente geeigneten Leseeinrichtung (3) und dem Datenverarbeitungsgerät (5) dem Saugschlauchmantel entlang verlegt ist, wobei die Verbindungskupplung (8) einer vom Saugschlauch (6) abnehmbaren Sauglanze (7) auch Verbindungselemente (9, 10) für die Anschlußleitung (4) umfaßt.

2. Vorrichtung nach Anspruch 1, dadurch gekennzeichnet, daß die Leseeinrichtung (3) mit Meßsensoren (11) zum Erfassen von Meßdaten der zugelieferten Milch ausgerüstet ist.

3. Vorrichtung nach Anspruch 1 oder 2, dadurch gekennzeichnet, daß als Verbindungselemente im Bereich der beiden Kupplungsteile (8a, 8b) jeweils eine Spule (10a, 10b) der in zwei Teilkreise (4a, 4b) getrennten Anschlußleitung (8a, 8b) für eine induktive Kopplung vorgesehen sind.

4. Vorrichtung nach Anspruch 3, dadurch gekennzeichnet, daß der Kupplungsteil (10a) des Saugschlauches (6) an einen Absaugstutzen eines Liefertanks od. dgl. ankuppelbar ist, welcher Absaugstutzen eine Spule eines Teilkreises einer Informationsleitung zur induktiven Kopplung an die zum Datenverarbeitungsgerät (5) führenden Anschlußleitung (4) aufweist.

FIG.1

FIG. 2

Europäisches
Patentamt

**EUROPÄISCHER RECHERCHENBERICHT**

Nummer der Anmeldung

EP   91 89 0310

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 604 645 (RAUDSZUS) <br> * Seite 5, Zeile 9 - Seite 6, Zeile 4; Abbildungen * <br> --- | 1 | B67D5/02 <br> B67D5/54 <br> G06K17/00 |
| A | EP-A-0 068 747 (WALKEY ET AL.) <br> * Anspruch 1; Abbildungen 1,2 * <br> --- | 1 | |
| A | EP-A-0 055 806 (SCHÖNHUBER) <br> --- | | |
| A | DE-A-3 008 452 (SCHÖNHUBER) <br> ----- | | |

| | | | RECHERCHIERTE SACHGEBIETE (Int. Cl.5) |
|---|---|---|---|
| | | | B67D <br> G06K |

Der vorliegende Recherchenbericht wurde für alle Patentansprüche erstellt

| Recherchenort | Abschlußdatum der Recherche | Prüfer |
|---|---|---|
| DEN HAAG | 25 MAERZ 1992 | DEUTSCH J.P.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)